# EUROPÄISCHE PATENTSCHRIFT

(11) **EP 0 603 847 B1**
(45) Veröffentlichungstag und Bekanntmachung des Hinweises auf die Patenterteilung: **15.07.1998**
(21) Anmeldenummer: 93120663.5
(22) Anmeldetag: 22.12.1993
(51) Int. Cl.: G02B 6/44

(54) **Verteiler-Gestellsystem**
Distribution frame
Répartiteur

(30) Priorität: 23.12.1992 CH 3920/92
(43) Veröffentlichungstag der Anmeldung: 29.06.1994
(73) Patentinhaber: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(56) Entgegenhaltungen:
- EP-A- 0 226 805
- EP-A- 0 329 935
- WO-A-91/05281

## Beschreibung

Die vorliegende Erfindung betrifft ein Verteiler-Gestellsystem für Signal-Uebertragungskabel, insbesondere Glasfaserkabel und zum Einsatz herausziehbarer Elektronikeinschübe oder Einschübe für die opto-elektronische Verbindungstechnik, mit Mitteln zur Aufnahme von Ueberlängen von Einzeladern oder Aderbündeln.

In der Telefonie oder anderen Signal-Uebertragungsbereichen sind Gestell-Systeme für den Anlagebau üblich, die aus mehreren Einheiten nach dem Baukastenprinzip zusammensetzbar sind, welche Einheiten insbesondere durch Querstreben verbindbare Vertikal-Träger und daran direkt oder indirekt befestigbare Mehrfach-Anschlussmittel umfassen, um die zahlenmässig erheblichen Zuleitungen übersichtlich und rationell andrahten zu können.

Diese Gestellsysteme können aber dort nicht genügen, wo Glasfaserkabel an Bedeutung gewinnen, wie in den Bereichen der Telefonie, der On-Line-Systeme u.a., da die optischen Leiter ihren Mindest-Krümmungsradius nicht unterschreiten dürfen, was sich beim Verlegen in den bekannten Verteilern nicht einhalten lässt. Zudem können die bekannten Verteiler die Forderung nach Zugänglichkeit zu den Glasfasern zwecks deren Verspleissung nicht erfüllen. Weiter muss es in der Kabelendgerätetechnik für Lichtwellenleiter und der opto-elektronischen Anschlusstechnik, wo modular kombinierbare Glasfaser-Kabelendgeräteeinschübe und Normspleisskassetten im Gestell verwendet werden, möglich sein, beim Herausziehen der betreffenden Baugruppenträger die Adern so zu führen, dass sie möglichst wenig Bewegung ausführen müssen, wofür die Adern mehrfach gefasst, geschlauft und fixiert werden. Diese Art der Bevorratung der Ueberlänge an den Aderbündeln ist allerdings aufwendig bezüglich der Notwendigkeit der mehrfachen Befestigung als auch der Einfädelung in die Befestigungsmittel.

Die europäische Patentanmeldung EP 329 935 A offenbart eine Anordnung und ein Verfahren zum Bevorraten optischer Adern; die Anordnung besteht aus einem Schrank in dem herauszichbare Einschube vorgesehen sind.

Aufgabe der vorliegenden Erfindung ist deshalb die Schaffung eines Verteiler-Gestellsytems der vorgenannten Art, das eine kompakte Bauweise gestattet, eine optimale Zugänglichkeit gewährleistet und eine völlig unempfindliche, sichere Bevorratung von Ueberlängen ermöglicht, so dass ein solches Verteiler-Gestellsystem allen Anforderungen an einen Glasfaser-Hauptverteiler (Gf-HVt) oder Verteiler im Netz (Gf-VtN) oder als Optical Line Termination (OLT) zu genügen vermag.

Dies wird erfindungsgemäss durch ein Verteiler-Gestellsystem erreicht, wie es im Anspruch 1 definiert ist.

Für eine optimale Zugänglichkeit und ungehinderte Kabelverlegung besitzt das Grundgestell einen oberen und einen unteren Viereckrahmen, die rückseitig über zwei Vertikalträger verbunden sind, an welchen sich direkt oder indirekt die Fest- oder Schwenkrahmen abstützen, ferner, dass die Fest- oder Schwenkrahmen seitlich versetzt sind und mit äusseren Rahmenabschnitten vertikale Kabelkanäle begrenzen und dass rückseitig der Fest- oder Schwenkrahmen ineinander übergehende Kabelführungskanäle angeordnet sind, deren Seitenwandungen im Uebergangsbereich vorgegebene Radien aufweisen.

Eine beispielsweise Ausführungsform des Erfindungsgegenstandes ist nachfolgend anhand der Zeichnung näher erläutert. Es zeigen:
- Fig. 1: in schaubildartiger Darstellung eine Ausführungsform des erfindungsgemässen Verteiler-Gestellsystems;
- Fig. 2: die Rückseite der Anordnung gemäss Fig. 1; und
- Fig. 3: einen einschiebbaren Baugruppenträger gemäss Fig. 1.

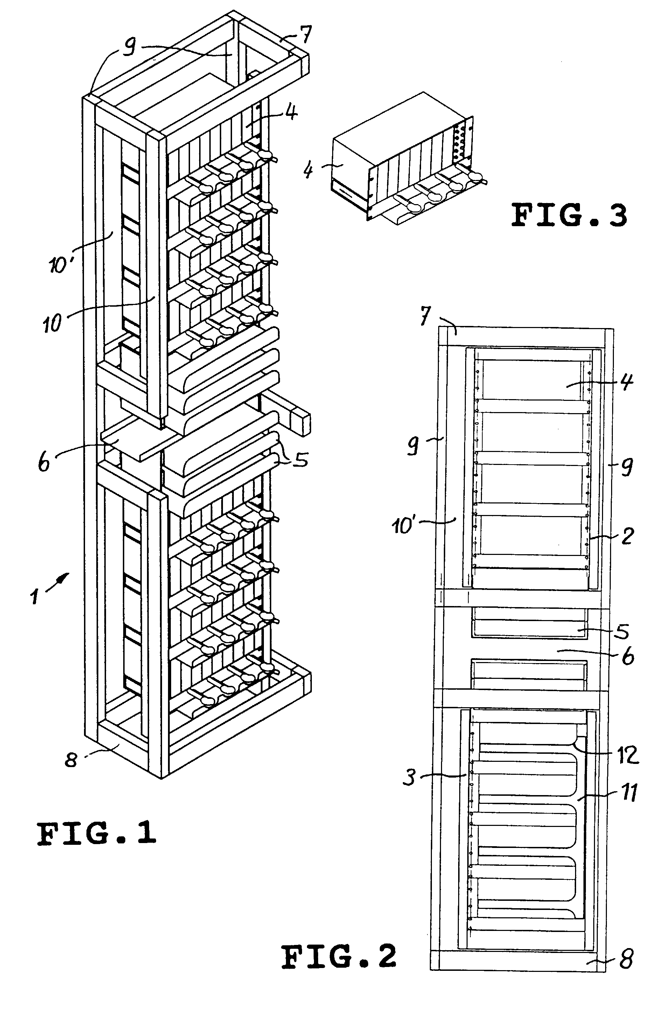

Das in Fig. 1 und 2 dargestellte erfindungsgemässe Verteiler-Gestellsystem umfasst ein Grundgestell 1, welches aus einer Rahmenkonstruktion gebildet ist mit einem oberen 2 und einem unteren Fest- oder Schwenkrahmen 3 zur herausnehmbaren Aufnahme von, Elektronikeinschübe oder Einschübe für die opto-elektronische Verbindungstechnik bildende Baugruppenträger 4, welche zwischen sich einen Bereich zur Aufnahme von Schubladen 5 für die Ueberlängen und einen Bereich 6 zur horizontalen Kabeldurchführung begrenzen.

Das Grundgestell 1 umfasst einen oberen 7 und einen unteren Viereckrahmen 8, die rückseitig über zwei Vertikalträger 9 verbunden sind, an welchen sich direkt oder indirekt die Fest- oder Schwenkrahmen 3 abstützen. Hierbei sind die Fest- oder Schwenkrahmen 3 seitlich versetzt und begrenzen mit äusseren Rahmenabschnitten 10 vertikale Kabelkanäle 10', die sich ohne weiteres zur Bildung von Auskreuzungsfelder unterteilen lassen.

Wie Fig. 2 mehr im Einzelnen zeigt, sind zudem rückseitig ineinander übergehende Kabelführungskanäle 11 an den Fest- oder Schwenkrahmen 3 angeordnet, deren Seitenwandungen im Uebergangsbereich 12 vorgegebene Radien aufweisen.

Wie Fig. 1 weiter zeigt, ist das Grundgestell unten offen und so sowohl für den Einsatz auf Normalboden als auch für Hohlböden (Doppelböden) geeignet.

Die Baugruppenträger 4 des Verteiler-Gestellsystems sind modular aufgebaut und können innenseitig in ihrem Rahmen einige parallel nebeneinander angeordnete Spleisskassetten der opto-elektronischen Verbindungstechnik oder Elektronikteile aufweisen.

Durch diese Massnahmen ist es nunmehr möglich, trotz höchster Belegungsdichte bei optimaler Zugänglichkeit den Minimal-Radius für Glasfaserkabel und eine grösstmögliche Ordnungstrennung der Kabel zu gewährleisten. Zudem gestattet diese Anordnung eine Vielzahl von Systemerweiterungen oder -varianten. Die erfindungsgemässen Grundgestelle können zudem beliebig aneinandergereiht werden.

## Patentansprüche

1. Verteiler-Gestellsystem für Signal-Übertragungskabel, insbesondere Glasfaserkabel, sowie zum Einsatz herausziehbarer Elektronikeinschübe oder Einschübe für die optoelektronische Verbindungstechnik, mit einem als Rahmenkonstruktion ausgebildeten Grundgestell (1), das einen unteren Viereckrahmen (8) und einen oberen Viereckrahmen (7) besitzt, wobei die beiden Viereckrahmen in etwa parallel zueinander angeordnet sind und durch zwei rückseitige Vertikalträger (9) miteinander verbunden sind, wobei ein dritter vorderseitiger, in etwa der Mitte unterbrochener Vertikal-träger (10) über zwei Querstreben mit einem der durchgehenden rückseitigen Vertikalträger verbunden ist, so daß eine Seite des Grundgestells durch einen oberen und einen unteren Viereckseitenrahmen gebildet ist; mit einem oberen (2) und einem unteren Fest- oder Schwenkrahmen (3) wobei der obere Fest- oder Schwenkrahmen an dem oberen Viereckseitenrahmen und der untere Fest- oder Schwenkrahmen an dem unteren Viereckseitenrahmen angebracht ist, wobei der obere (2) Fest- oder Schwenkrahmen zur einschiebbaren Aufnahme von Baugruppenträgern in seinem oberen Teil und von Schubladen in seinem unteren Teil ausgebildet ist und wobei der untere (3) Fest- oder Schwenkrahmen zur einschiebbaren Aufnahme von Schubladen in seinem oberen Teil und Baugruppenträger in seinem unteren Teil ausgebildet ist; mit Schubladen (6), die ohne Seitenwände ausgebildet sind und eingeschoben zur Aufnahme von Überlängen von Einzeladern oder Aderbündeln dienen; wobei die eingeschobenen Schubladen des oberen und unteren Fest- oder Schwenkrahmens in solch einem Abstand angeordnet sind, daß sie einen Bereich zur horizontalen Kabeldurchführung begrenzen, in dem der vorderseitige Vertikalträger (10) unterbrochen ist.

## Claims

1. Distributor frame system for signal transmission cables, especially glass-fibre cables, as well as for insertion of withdrawable electronic racks or racks for opto-electronic connection technology, with a basic frame (1) which is constructed as a frame structure and comprises a lower rectangular frame (8) and an upper rectangular frame (7), wherein the two rectangular frames are arranged approximately parallel to one another and are connected together by two vertical supports (9) at the rear side, wherein a third vertical support (10), which is at the front side and interrupted approximately in the middle, is connected by way of two transverse struts with one of the continuous vertical supports at the rear side, so that one side of the basic frame is formed by an upper and a lower rectangular frame; with an upper (2) and a lower fixed or pivot frame (3), wherein the upper fixed or pivot frame is mounted at the upper rectangular side frame and the lower fixed or pivot frame is mounted at the lower rectangular side frame, wherein the upper (2) fixed or pivot frame is constructed for the insertable reception of subassembly carriers in its upper part and of drawers in its lower part and wherein the lower (3) fixed or pivot frame is constructed for insertable reception of drawers in its upper part and subassembly carriers in its lower part, and with drawers (6), which are constructed without side walls and when pushed in serve for reception of excess lengths of individual wires or wire bundles, wherein the pushed-in drawers of the upper and lower fixed or pivot frame are arranged at such a spacing that they bound a region, for horizontal cable guidance through, in which the vertical support (10) at the front side is interrupted.

## Revendications

1. Système de bâti répartiteur pour des câbles de transmission des signaux, notamment des câbles en fibres de verre, ainsi que pour l'utilisation de tiroirs enfichables électroniques ou de tiroirs enfichables extractibles pour la technique de liaison opto-électronique,
avec un bâti de base (1) réalisé sous forme de construction à châssis qui possède un châssis quadrangulaire inférieur (8) et un châssis quadrangulaire supérieur (7), les deux châssis quadrangulaires étant disposés à peu près parallèlement l'un à l'autre et sont reliés l'un à l'autre par deux supports verticaux (9) au côté arrière, un troisième support vertical (10) au côté avant, rompu à peu près au milieu, étant relié par deux traverses à l'un des supports verticaux continus au côté arrière, de telle sorte qu'un côté du bâti de base est formé par des châssis quadrangulaires supérieur et inférieur,
avec un châssis fixe ou pivotant supérieur (2) et inférieur (3), le châssis fixe ou pivotant supérieur étant disposé au châssis quadrangulaire supérieur et le châssis fixe ou pivotant inférieur au châssis quadrangulaire inférieur,
le châssis fixe ou pivotant supérieur (2) étant réalisé pour la réception enfichable de supports de bloc dans sa partie supérieure et de tiroirs dans sa partie inférieure, et où le châssis fixe ou pivotant inférieur (3) est réalisé pour la réception enfichable de tiroirs dans sa partie supérieure et de supports de bloc dans sa partie inférieure,
avec des tiroirs (6) qui sont réalisés sans parois latérales et qui, lorsqu'ils sont, insérés, sont destinés à recevoir des surlongueurs de conducteurs individuels ou de faisceaux de conducteurs, les tiroirs insérés des châssis fixes ou pivotants supérieur et inférieur étant disposés à une telle distance qu'ils délimitent une zone pour le passage horizontal des câbles dans laquelle le support vertical au côté avant (10) est interrompu.
